(19) Europäisches Patentamt

European Patent Office

Office européen des brevets

(11) **EP 2 613 073 B1**

(12) **EUROPEAN PATENT SPECIFICATION**

(45) Date of publication and mention
of the grant of the patent:
**05.09.2018 Bulletin 2018/36**

(21) Application number: **11855629.9**

(22) Date of filing: **20.10.2011**

(51) Int Cl.:
**F16L 21/00** *(2006.01)* **F16L 21/02** *(2006.01)*
**F16L 23/024** *(2006.01)* **F16L 23/026** *(2006.01)*
**F16L 23/028** *(2006.01)*

(86) International application number:
**PCT/JP2011/074116**

(87) International publication number:
**WO 2012/096042 (19.07.2012 Gazette 2012/29)**

(54) **CONNECTING STRUCTURE FOR PRESSURE PIPING**

VERBINDUNGSSTRUKTUR FÜR DRUCKROHRLEITUNGEN

STRUCTURE DE RACCORD POUR TUYAUTERIE SOUS PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2011 JP 2011004969**

(43) Date of publication of application:
**10.07.2013 Bulletin 2013/28**

(73) Proprietor: **Kobayashi, Kazumi
Hiroshima 721-0913 (JP)**

(72) Inventor: **KOBAYASHI, Masato
Fukuyama-shi
Hiroshima 721-0913 (JP)**

(74) Representative: **Kramer Barske Schmidtchen
Patentanwälte PartG mbB
European Patent Attorneys
Landsberger Strasse 300
80687 München (DE)**

(56) References cited:
**CN-Y- 2 616 783         JP-A- 8 121 662
JP-A- 10 047 539       JP-A- 2005 081 490
JP-A- 2010 180 957    JP-U- 54 043 010
JP-U- 58 142 476**

**Description**

TECHNICAL FIELD

The present invention relates to a connecting structure of pressure piping for permitting to connect the pressure piping on-site without requiring welding.

BACKGROUND ART

In Japanese Industrial Standards, strength of couplings that should be used is defined depending on a connected pressure piping. In particular, concerning the strength of couplings, the strength that the base material of the pressure piping connected to the coupling is cut in a tension test is required. In addition, with respect to a connection by welding, the pressure piping is required to extend a leg length for all over the place in order to keep weld strength that the base material of the pressure piping is cut in the same way. Such a welding work requires skill, and therefore, the working person is limited.

Different connecting means for the welding includes adhesive and bolts. For example, Japanese Examined Utility Model Application Publication No. 51-9667 and Japanese Unexamined Patent Application Publication No. 2003-180011 disclose means for combining pipe and pipe by bolts. These technologies are to fix pipes for accommodating electric wires by transforming with fastening force of the bolts screwed on peripheral surface walls of the pipes along their radial direction. These pipes are to protect the inner electric wires, and the electric wires in themselves do not either have pressure or leak. Japanese Unexamined Patent Application Publication No. 2010-180957 discloses a technique for connecting poles with the bolts, wherein the poles are fixed with fastening force of the bolts by transforming. Further, CN 2 616 783 Y discloses a connecting structure according to the preamble of claim 1.

SUMMARY OF THE INVENTION

OBJECT TO BE SOLVED BY THE INVENTION

In connecting pressure piping for sending high pressure fluid without using the welding, it is necessary to keep strong tensile strength and sealing against the internal fluid. In the above-mentioned bolt-connecting, it is predicted that the connecting strength is improved when enhancing the material strength of the bolt, bolt diameter, and/or fastening pressure. However, a problem about the constitution to improve the strength or a means to seal a fluid flowing through the pressure piping has not been solved. The present invention aims to provide connecting structure of pressure piping using the bolts as a connecting means.

MEANS TO SOLVE THE PROBLEM

The present invention is characterized in connecting structure for connecting pressure piping to pour fluid applied pressure inside, which includes a cylindrical sleeve having a plurality of through holes at separate locations in a length wise direction, and with identical angular intervals and without overlapping in a circumferential direction, and a plurality of bolts to be inserted into the through holes of the sleeve. Non-through holes having screw threads are provided in the pressure piping at locations corresponding to the holes. When the pressure piping is inserted into the interior space of the sleeve, the holes open into each other and the bolts are screwed into the communicating holes.

EFFECTS OF THE INVENTION

According to pipe couplings of the present invention, it is possible to connect the pressure piping with the bolts without using welding in furnishing the pressure piping in which the tensile strength is required.

BRIEF DESCRIPTION OF THE DRAWINGS

FIGS. 1A, 1B, 1C and 1D illustrate a test sample of connecting structure.
FIGS. 2A, 2B, 2C and 2D illustrate a test sample of connecting structure.
FIGS. 3A, 3B and 3C illustrate another test sample of connecting structure.
FIGS. 4A and 4B illustrate connecting structure according to a first embodiment.
FIG. 5 illustrates connecting structure according to a second embodiment.

FIG. 6 illustrates connecting structure according to a third embodiment.

FIGS. 7A and 7B illustrate connecting structure according to a forth embodiment.

FIG. 8 illustrates connecting structure according to a sixth embodiment.

FIG. 9 illustrates connecting structure according to a seventh embodiment.

FIGS. 10A, 10B, 10C and 10D illustrate connecting structure using a detent according to an eighth embodiment.

FIGS. 11A, 11B and 11C illustrate connecting structure according to a ninth embodiment.

FIG. 12 illustrates connecting structure according to a tenth embodiment.

FIG. 13 illustrates connecting structure according to an eleventh embodiment.

FIG. 14 illustrates connecting structure according to a twelfth embodiment.

FIGS. 15A and 15B illustrate connecting structure according to a thirteenth embodiment.

FIG. 16 illustrates connecting structure according to a fourteenth embodiment.

FIGS. 17A, 17B and 17C illustrate connecting structure according to a fifteenth embodiment.

FIGS. 18A, 18B and 18D illustrate connecting structure according to a sixteenth embodiment.

FIG. 19 illustrates connecting structure according to a further example.

FIGS. 20A, 20B and 20C illustrate connecting structure according to further examples.

FIGS. 21A, 21B and 21C illustrate connecting structure according to further examples.

FIGS. 22A and 22B illustrate connecting structure according to a further example.

## MODE FOR CARRYING OUT THE INVENTION

The tensile strength of the connecting structure for connecting the pressure piping with the bolts will be examined. In the above-mentioned patent documents, the pipes are connected by transformation of the outer circumferential walls of the pipes, which is caused by press force of screwed bolts. On the other hand, in a pressure piping equipment, the tensile strength for the pressure piping is decided in the Japanese Industrial Standards, and to obtain enough connecting force, the bolts are inserted into holes provided on the pressure piping in addition to the transformation of the outer circumferential walls.

Besides, although the breaking strength of the pressure piping itself decreases because the holes are provided on the pressure piping, an object of the present embodiment is to obtain the connecting strength more than a yield load of the pressure piping.

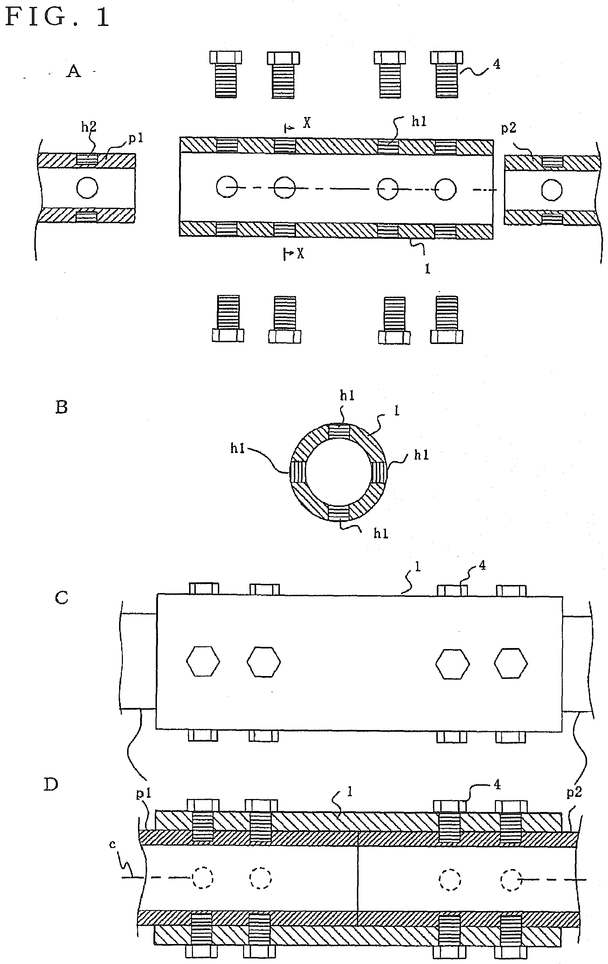

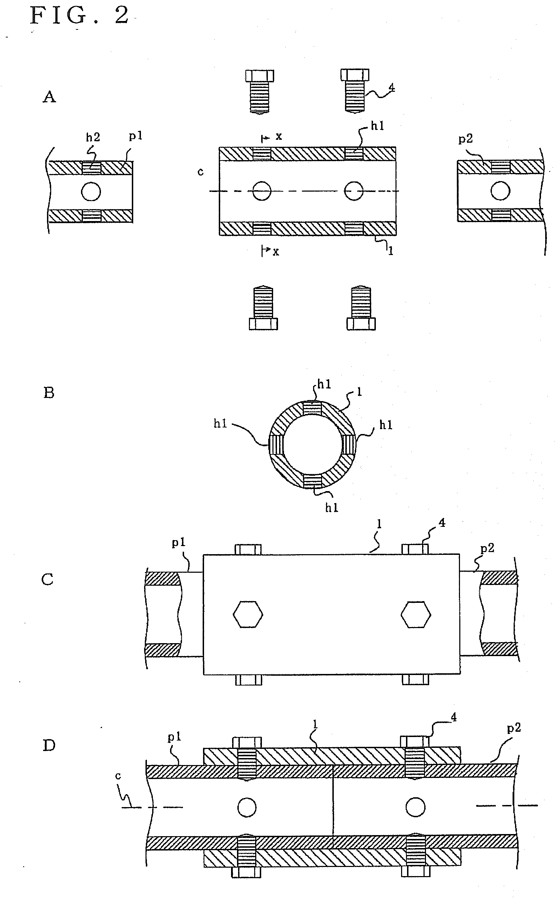

FIG. 1 is a view for explaining a sample used in a test. The sample according to FIG. 1 is so constructed that pressure piping p1, p2 are inserted from both sides of a cylindrical sleeve 1 and screwed with four bolts through holes h1, h2 that communicate the sleeve 1 and the pressure piping p1, p2 with 90 degrees intervals on the same circumference. FIG. 1B is a cross-sectional view of FIG. 2 taken along the line X-X, showing the situation in which the holes h1 are drilled on the sleeve 1 at 90 degrees intervals. FIG. 1C shows the situation in which the bolts 4 are screwed into the holes, and FIG. 1D is a cross-sectional view of it.

Even if the bolts 4 are tightened, an inner wall of the sleeve 1 does not equally adhere on outer walls of the pressure piping p1, p2. It is a reason that the walls of one side move away from each other when the opposite walls of the other side are closely adhered by tightening the bolts 4. Accordingly, in case of the connecting structure like this sample, the tensile strength of the connecting structure depends on not frictional force of the walls by tightening of the bolts 4 but wholly the durability of the bolts for shearing force caused by a gap between the sleeve and the pressure piping due to the tensile force.

First, concerning the sample of FIG. 1, the relation between the tensile strength and cross-sectional area of the bolt 4 is examined by using eight bolts having strength smaller than the pressure piping p1, p2. The pressure piping p1, p2 are STPT410 (carbon steel pipe for pressure service), sch160, 20A. Two kinds of bolts with a diameter of 2.5 mm or 4 mm were used. As a result, the bolt 4 broke in any test, and the breaking load in case of 2.5mm was 20 KN and the breaking load in case of 4mm was 54 KN. The strength per unit cross-sectional area of a bolt 4 in any samples is 0.54 KN/mm$^2$ to 0.51 KN/mm$^2$, which are much the same. It can be confirmed that the tensile strength is calculated according to the cross-sectional area and the number of bolts 4.

Next, concerning the sample of FIG. 2, bolts 4 of high strength more than the pressure piping p1, p2 was used. The pressure piping p1, p2 are STPG370 (carbon steel pipe for pressure service), sch80, 20A. The pressure piping p1, p2 respectively have the cross section of 285 mm$^2$, tensile breaking load equal or greater than 106 KN (105,450 = 370 x 285), and the yield load equal or greater than 62 KN. When opening four holes each having a diameter of 10 mm and a depth of 3.9 mm on the same circumferences of the pressure piping p1, p2, a decrease in the cross-sectional area on the same circumference of the pressure piping p1, p2 becomes 156 mm$^2$ (10 x 3.9 x 4). The tensile breaking load of the base metal of the pressure piping p1, p2 decreases from equal to or greater than 106 KN, which is in a state without a hole, to equal or greater than 48 KN because the cross-sectional area is decreased. Therefore, it is expected that the tensile breaking load of the base metal of pressure piping p1, p2 is below the yield load.

In a pulling test for this sample, the pressure piping broke at a position of the circumference on which bolt holes h1 are provided, in 78 KN. Therefore, it has been found the pressure piping of this case can withstand a tension bigger than the yield load. On the other hand, it is guessed that the used pressure piping STPG370 were stronger than a standardized strength of 370 N/mm² to begin with as a reason why the tension was bigger than the tensile breaking load calculated from the cross-sectional area of the pressure piping p1, p2 of the sample of FIG. 2.

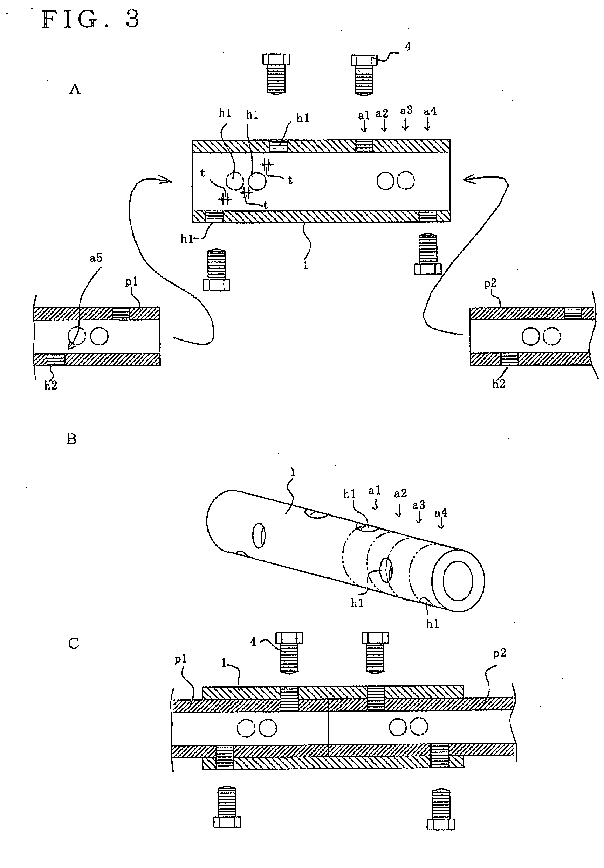

Furthermore, a sample of FIG. 3 is so formed that the pressure piping are tightened with four bolts, which are provided so as to be shifted in the length direction of the pressure piping p1, p2 and by a 90 degrees angle on different circumferences. Besides, in the sectional views, dashed-dotted lines show the holes that are formed on the cut pressure piping, which are located forward. FIG. 3B is a perspective view of a sleeve 1, showing a situation that bolt holes are provided on each of circumferences a1, a2, a3 and a4 shifting in the length direction of the pressure piping. In figures, chain double dashed lines show circumferences passing through the center of each hole h1. In the adjacent bolt holes, a shifting amount among the circumferences means a distance between the closest outer diameters in a centerline c direction. In this sample, a shifting amount t is 2 mm. The shifting amount must be bigger than 0. FIG. 3C is a cross section showing a case where the bolts are screwed together. Each of the used bolts has a diameter of 10 mm and tensile strength of 1,000 N/mm².

In case of this sample, the decrease in the cross-sectional area on the circumferences is 39 mm² that is equivalent to the dimensions of one lost hole. It is anticipated that the tensile breaking load of the base material of the pressure piping p1, p2 on the circumferences a1, a2, a3 and a4 becomes equal or greater than 92 KN because the decrease in cross-sectional area reduces the strength. This value exceeds the yield load of 62 KN. On the other hand, when the sleeve 1 and the bolts have enough strength than the pressure piping p1, p2, it is anticipated that a posterior position a5 of each of the holes h2 of the pressure piping p1, p2 breaks by the tension. When performing a tension test for each sample in FIGS. 3, the pressure piping broke by power of 109 KN. A fracture surface continued obliquely from the hole to the hole. On the other hand, there happened no breaks at the positions on the circumferences a1, a2, a3 and a4 of the pressure piping p1, p2.

A pressure piping of STPT410, sch160, 20A was tested for the sample shown in FIG. 3 in the same way. This pressure piping has a cross-sectional area of 375 mm², the tensile breaking load equal to or greater than 154 KN, and the yield load equal to or greater than 92 KN. The expected tensile load of the base material of the pressure piping p1, p2 at the positions of the circumferences a1, a2, a3 and a4 is 131 KN from the cross-sectional area. The pressure piping broke by power of 134 KN in the test. A fracture surface obliquely continued from the hole to the hole like the former test example. The bolt holes are arranged so as to be at equal angle intervals for all circumferences and not to overlap one another along a centerline direction. This is due to equalize the shearing force to the bolt.

The tests reveal that the cross-sectional area of the pressure piping lost by the bolts can be reduced and besides the strength can be kept with few cross-sectional area and bolts in raising the tensile breaking load per unit area of the bolt. Here, because the shearing strength is expected with 60% of the tensile strength, as for the strength of the bolt, it is with 1.67 times (1/0.6) of the tensile strength of the pressure piping to be used. Therefore, it is desirable to use a bolt with strength equal to this.

Besides, although a sample which adhesive was applied between the pressure piping and the sleeve in FIG. 3 is tested, the improvement of the tensile strength was not seen. Accordingly, it is expected that the use of the adhesive improves sealing performance of the pressure piping for the air.

Moreover, the material of the sleeve is the same as at least connected pressure piping or higher tensile strength. Otherwise, a sleeve having a cross-sectional area that the tensile breaking load becomes bigger than the pressure piping is used.

Thus, when connecting the pressure piping with the bolts, it was revealed that the tensile breaking load equal to or greater than the yield strength of the pressure piping was shown without the break at least on the circumferences a1 to a4 of the pressure piping with the cross-sectional area reduced due to the bolt holes according to proper control of the tensile shearing load, the number and dispositions of the bolts.

Specifically, the bolts are arranged on the different circumferences, and the number of bolts and the strength of a bolt unit area can be decided for the yield strength of the pressure piping as follows.

$$F \; < \; (S - L) \times N1 \; = \; n \times (r/2)2 \times \pi \times N2 \times 0.6 \; \cdots$$

Expression 1

Besides, in Expression 1,

Tensile breaking strength of a pressure piping per unit area N1
Tensile breaking strength of a bolt per unit area N2
Diameter of a bolt r

The cross-sectional area of a pipe S
The number of bolts n
Yield load of a pressure piping F
The cross-sectional area lost due to a bolt hole on the same circumference L
0.6 is a correction factor for the strength of a bolt due to shearing force.

When there is a plurality of bolt holes on the same circumference, the cross-sectional area L becomes the total cross-sectional area lost due to the bolts. Further, the cross-sectional area L becomes the cross-sectional area of the circumference that is most greatly lost in case the cross-sectional area to be lost differs among the circumferences. Besides, the bolt hole should be provided to one place on the same circumference because the strength of the pressure piping is lost when a plurality of bolt holes are opened on the same circumference. According to this decision, it is possible to avoid breaks on the circumferences a1 to a4 according to the reduction of the cross-sectional area of the pressure piping and the fracture of the bolts oneselves.

The following construction is used as connecting structure of the piping for flowing the pressure fluid inside.

The bolt holes do not penetrate the pressure piping because inner fluid leaks outside through the bolt holes. Besides, sealing is performed at a position of an end face of the pressure piping to limit the range where the inner fluid comes in contact with. Moreover, in using an O-ring, a groove for the O-ring is provided to not the end face of the pressure piping but an insert side. Because, the pressure piping is often cut for length adjustment in a piping site and it is difficult to notch the O-ring groove within the wall thickness of the pressure piping in the site. Hereinafter, concrete examples for connecting pressure piping using connection strength to be provided with a bolt is explained particularly referring to figures.

EXAMPLE 1

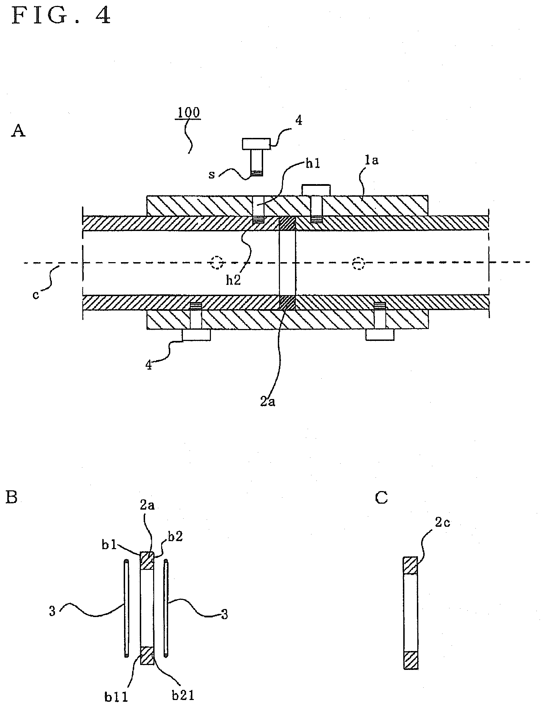

A connecting structure 100 related to a first example is illustrated in FIG. 4. The connecting structure 100 includes a sleeve 1a, an insert 2a, O-rings 3 and a plurality of bolts 4.

The sleeve 1a is a linear cylindrical pipe, and the insert 2a is inserted in an inner circumferential face side.

The insert 2a has annular faces b1, b2 in a centerline c direction of the sleeve 1a, and annular ring grooves b11, b21 are provided to the annular faces b1, b2, respectively. An O-ring 3 is put in each of the ring grooves b11, b21. The bolts 4 are tightened on different circumferences shifting in the centerline c direction while each shifting a 90 degrees angle as same as the connecting structure in FIG. 3. Holes h2 do not penetrate the pressure piping p1, p2 to prevent the inner fluid from leaking outside along a screw thread. The hole h1 of the sleeve 1a side has no screw thread, but the only hole h2 has a screw thread. In response to this, the bolt 4 has a screw thread only at a position s to be screwed in the hole h2, but no screw thread between a head of the bolt 4. This is because it is to improve the strength of the bolt. In place of the insert 2a, various sealants can be used as an insert in accordance with fluid flowing in the pressure piping p1, p2 (liquid, gas, low pressure, high pressure). For example, a gasket, packing and so on (FIG. 4B, 2c) can be used as a sealant to keep airtight and watertight.

Referring now to a point to connect two pieces of pressure piping p1, p2 having the connecting structure 100.

Ends of the pressure piping p1, p2 are pushed into the sleeve 1a across the insert 2a from both sides and pressed each other to compress the O-ring 3 of the insert 2a. The compressed pressure is equivalent to prestress in using the O-ring 3.

Under the condition, the pressure piping p1, p2 are marked in response to the position of a necessary plurality of holes h1. Then, the pressure piping p1, p2 are removed from the sleeve 1a, and holes h2 are provided to the marked position. The depth of the hole h2 is not beyond the wall thickness of the pressure piping p1, p2. Screw processing is made on the holes h2.

Next, the pressure piping p1, p2 are pushed into the sleeve 1a across the insert 2a and pressed by pressure equivalent to the prestress of the O-ring 3 to return relative position of each of the pressure piping p1, p2 and the sleeve 1a to the state that the hole h2 has been marked. Thereafter, the bolts 4 are screwed from the holes h1 of the sleeve 1a and tightened, respectively. In making screw processing on the holes h1 of the sleeve 1a side, pressure may be thrown open after screw processing is simultaneously made on the holes h1, h2 in the state that pressure is applied from both sides of the pressure piping p1, p2 without marking, and screw threading bolts are tightened on the holes h1, h2.

Besides, if the ring grooves b11, b21 have the depth just adaptable for the O-ring 3 on putting appropriate sealing pressure on the O-ring 3, appropriate pressure is naturally put on the O-ring 3 by pushing the pressure piping p1 or p2 into the sleeve 1a or 1b until the end face of the pressure piping p1 or p2 contacts with the annular face b1 or b2 of the insert 2a. If the depths of the ring grooves b11, b21 are decided in advance in this way, the locations of the holes h2 can be identified and processed without marking because it is known beforehand where of the pressure piping p1, p2 the holes h1 of the sleeve 1are located when they are pushed most to the depths.

According to this, the pressure piping p1 is connected to the pressure piping p2 in the state that the appropriate prestress is pressured on the O-ring 3. An adhesive can be used for the face of either the outer circumference area of the pressure piping p1, p2 or the inner circumferential face of the sleeve 1a before again pushing the pressure piping p1, p2 into the sleeve 1a after perforating the hole h2. When using the adhesive, the fluid tightness is improved. The O-rings 3 are positioned at the end faces of the pressure piping p1, p2 because the insert 2a is restricted from positioning in the pipe by an inner wall of the sleeve 1a. The neighborhoods of the perforated holes h2 of the pressure piping p1, p2 are quenched by carburizing or induction quenching to increase in the tensile strength per a particular area, and can increase in the tensile breaking load decreased by the perforated holes 2 of the pressure piping p1, p2.

In the first example, the pressure piping p1, p2 and the sleeve 1a are made with steel materials, but use other metal materials.

EXAMPLE 2

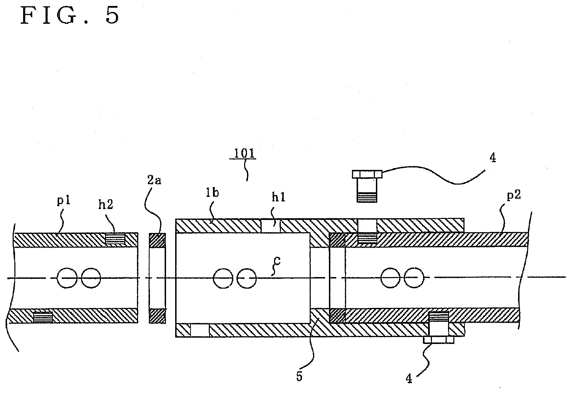

FIG. 5 shows a connecting structure 101 related to a second example. In the connecting structure 101, an annular neck portion 5 projects from the center in a lengthwise direction of the inner circumference side of the sleeve 1b. Both side faces of the neck portion 5 are perpendicular to a centerline c, having the same thickness as the pressure piping p1, p2. Besides, the inner circumferential face of the neck portion 5 is a curved surface having the same diameter as the inner circumference of the pressure piping p1, p2.

The inserts 2a are respectively inserted from both ends of the sleeve 1b with the O-rings 3, and each comes into contact to the neck portion 5. Even if all of the bolts 4 break, the sleeve 1b can be restricted from slipping on the pressure piping p1, p2 and falling out the contact portion because the neck portion 5 is provided.

Referring to a combination procedure of two pressure piping p1, p2 according to the connecting structure 101. The insert 2a is inserted from the sleeve 1b, and then, two pressure piping p1, p2 are pushed into the sleeve 1b from both sides, and then, pressing force is given to the pressure piping p1, p2. The pressing force is equivalent to the prestress that the O-ring 3 mounted on the insert 2a catches in a use state.

Under this state, like a case of the first example, the pressure piping p1, p2 are marked positions corresponding to the positions of the holes h1, and thereafter, each of the pressure piping p1, p2 is pulled out of the sleeve 1b, the holes h2 are perforated, and the screw processing is performed.

The inserts 2a are respectively inserted from both ends of the sleeve 1b, the end portions of the pressure piping p1, p2 are pushed therein, and they are tightened by screwing with bolts 4 with the pressing force corresponding to the prestress of the O-ring 3 applied. Besides, the adhesive can be used between the pressure piping p1, p2 and the sleeve 1a together with the bolts.

Just as in the earlier example, if the depth of the ring grooves b11, b12 of the insert 2a is made in such depth that the O-ring 3 is fit for the ring grooves b11, b12 when appropriate sealing pressure is applied thereon, the positions of the holes h2 can be specified and processed without marking.

EXAMPLE 3

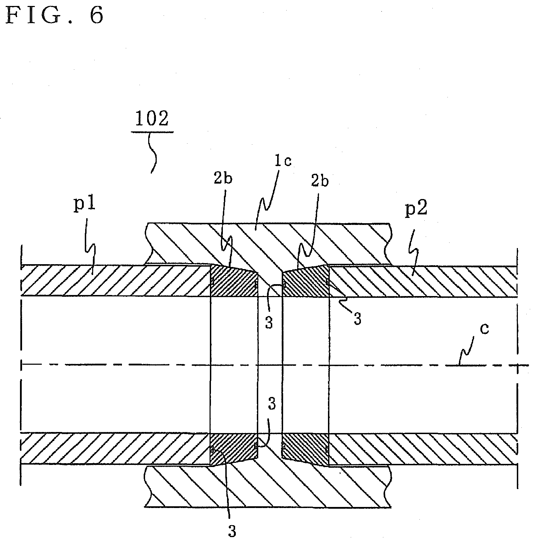

FIG. 6 shows a connecting structure 102 (EXAMPLE 3) having a sleeve 1c deformed from the sleeve 1b of the second example and an insert 2b. The area surrounding the neck portion 5 is deformed, and it is expanded and shown in the figure. The same mark is referred to the previously explained part in FIG. 3.

In FIG. 6, each of the outer circumferential faces of a pair of inserts 2b is formed into a conical male taper face whose diameter becomes small toward the neck portion 5 side, and each of a part of inner circumferential faces of the sleeve 1c is also formed in a conical male taper face whose diameter becomes small toward the neck portion 5 side.

According to this example, when each of the inserts 2b is pushed to the depth side, the sleeve 1c and the pressure piping p1, p2 come to be concentrically located by the conical male taper face.

EXAMPLE 4

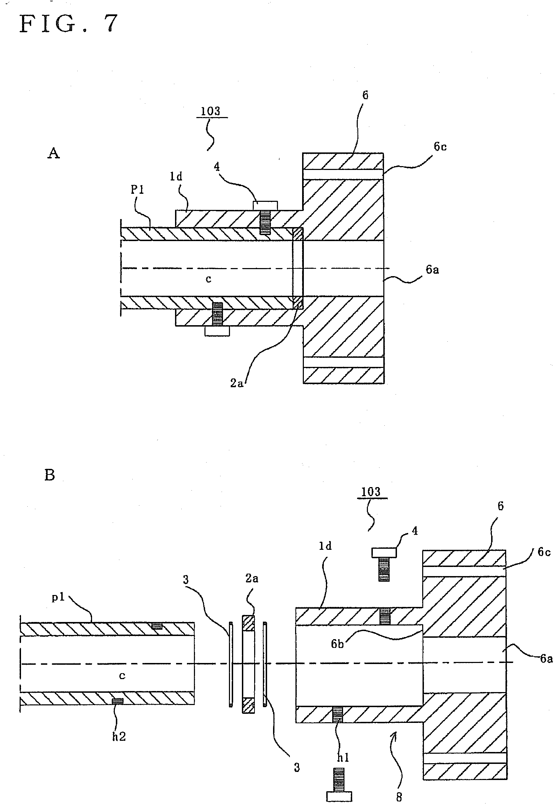

EXAMPLE 4 is explained with reference to FIG. 7. A connecting structure 103 referring to this example comprises a sleeve portion 1d, a flange portion 6, an insert 2a, O-rings 3 and bolts 4. In FIG. 7, the same mark is referred to the part where is the same as EXAMPLE 2 substantially.

The sleeve portion 1d and the flange portion 6 form a flange coupling 8 as a unified part. The flange portion 6 has an inner hole 6a concentric with a hollow inside the sleeve portion 1d as a fluid channel, besides having an annular face 6b perpendicular to the centerline c between the inner hole 6a and the sleeve portion 1d. The multiple bolt holes 6c are formed on the outer circumference side of the flange portion 6 to insert bolts for connecting the flange portion 6 to the other flange coupling. The insert 2a is inserted into the inner circumferential face of the sleeve portion 1d. Here, the multiple holes h1 pass through the sleeve portion 1d.

An order for connecting the pressure piping p1 according to the connecting structure 103 is the same as a connecting example of the pressure piping at one side in EXAMPLE 2. The pressure piping p1 should be connected to the sleeve portion 1d by replacing the annular face 6b with one of the sides of the neck portion 5 in EXAMPE 2 (FIG. 5).

Thus connected pressure piping p1 with the flange portion 6 is connected to another flange coupling having an optional structure through for example bolts that are inserted into the bolt holes 6c and nuts and packing that are screwed on the bolts.

EXAMPLE 5

A connecting structure of EXAMPLE 5 may be so constructed that a female taper face having a small diameter toward the annular face 6b side be formed to the inner circumferential face of the sleeve portion 1d of EXAMPLE 4 and the insert 2b of EXAMPLE 3 be used. In this case, it is easy to locate the insert 2a as well as EXAMPLE 3.

EXAMPLE 6

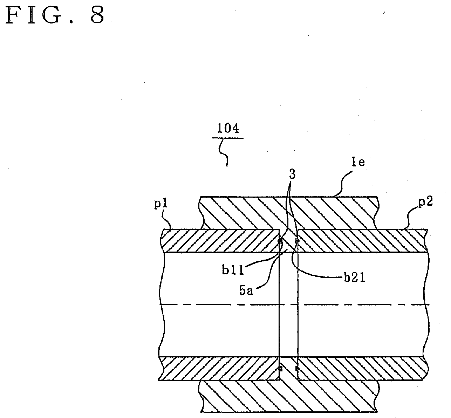

EXAMPLE 6 is explained with reference to FIG. 8. In a connecting structure 104 related to this EXAMPLE, a neck portion 5a of a sleeve 1e has annular ring-grooves bll, b21 formed concentrically to the sides, respectively, unlike the neck portion 5 of the sleeve 1b of EXAMPLE 2. Each of the ring-grooves b11, b21 has the O-ring 3.

This structure is comparable to what the neck portion 5 in EXSAMPLE 2 has a seal function of the insert 2a. In this EXAMPLE, it is not easy to install the O-rings 3 in the ring-grooves b11, b21 formed in the inner part of the sleeve 1e, but the number of the parts can be reduced because the insert 2a is not used.

EXAMPLE 7

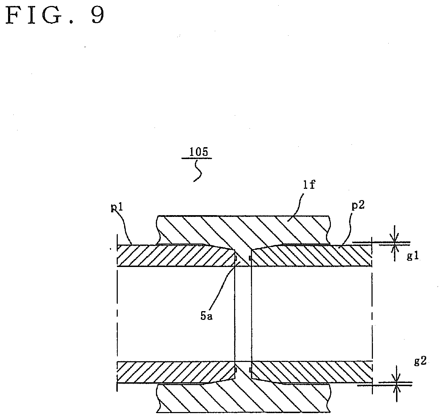

The connecting structure 103 referred to EXAMPLE 4 can be transformed to a connecting structure 105 as shown in FIG. 9. In the connecting structure 105, the tips of the outer circumferential faces of the pressure piping p1, p2 are respectively formed into male tapering faces. And the inner circumferential face of the sleeve 1f is formed into the female tapering face toward the inner part.

Accordingly, even if there are gaps g1, g2 between the inner circumferential face of the sleeve 1f and the inserted pressure piping p1, p2 on a radius, they are automatically made in a concentric location by guiding of the male and female tapering faces.

EXAMPLE 8

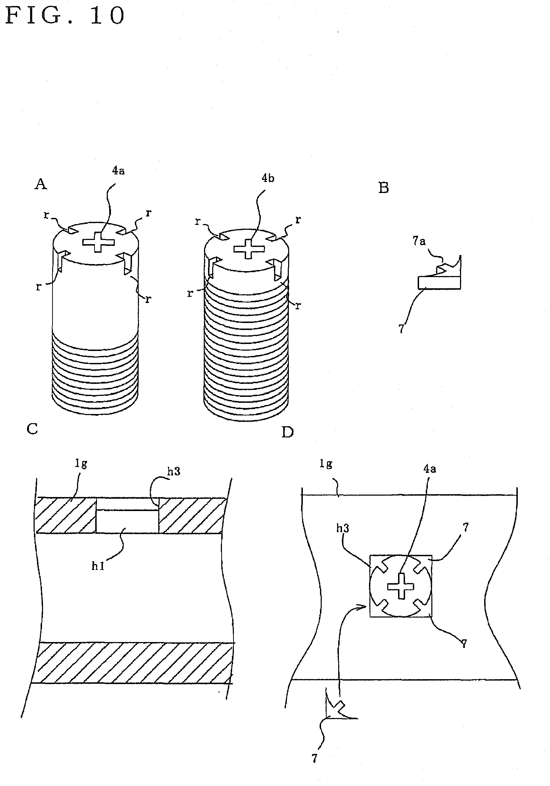

FIG. 10 shows EXAMPLE 8. This is an example wherein the sleeve and the bolt are respectively modified. A bolt 4a is a Phillips-screw, which has a screw thread on portion corresponding to the hole h2 and notches r located at four portions diagonally on the head. A bolt 4b has a screw thread on the portion corresponding to the holes h1, h2. On the other hand, the hole h1 of the sleeve 1g has a square hollow h3 on the outer circumferential side of the sleeve 1g. FIG. 10B shows a detent 7. The detent 7 has place surfaces corresponding to a spatial configuration that is formed between the square hollow and the circular bolt-head. A convex portion 7a of the detent 7 is inserted into a notch r of the head of the bolt 4b. The bolt 4a is prevented from rotating by fitting the detents 7 into four spaces between the hollow h3 and the head of the bolt 4a. The detent 7 should be made out of stainless steel.

EXAMPLE 9

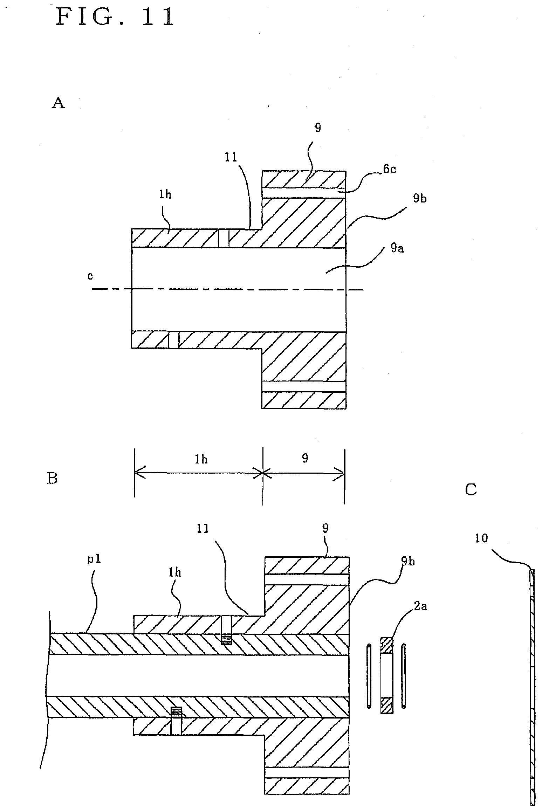

FIG. 11 shows EXAMPLE 9. This example refers to a flange coupling 11, which is the same as having changed a part of the flange coupling 8 in the connecting structure 103 of EXAMPLE 4, and the same mark is referred to the same part substantially.

A sleeve 1h and a flange portion 9 form a unified part. The flange portion 9 has an inner hole 9a as a fluid channel. The flange coupling 11 differs from the flange coupling 8 of EXAMPLE 4 in that the flange portion 6 and the sleeve portion 1d are continuously connected without a perpendicular annular face 6b (FIG. 7) therebetween. Therefore, the pressure piping p1 has the end face reached an end face 9b of the flange portion 9 through a hollow of the flange coupling 11. The end portion of the pressure piping p1 can either pass through the flange coupling 11 and protrude from the end face 9b or overlook at the outside short before the end face 9b. The multiple bolt holes 6c for inserting the bolts are formed on the outer circumferential side of the flange portion 6. As shown in FIG. 11B, in case connecting to another flange coupling after connecting to the pressure piping p1, the insert 2a and the packing 10 (FIG. 11) are supplied on the end face of the pressure piping p1 or both the end face of the pressure piping p1 and the end face 9b of the flange portion 9. Here, the end face of the pressure piping p1 is exposed, and therefore, seals such as the insert 2a and the packing 10 can be immediately dropped out when removing the flange coupling 11 from the other coupling.

EXAMPLE 10

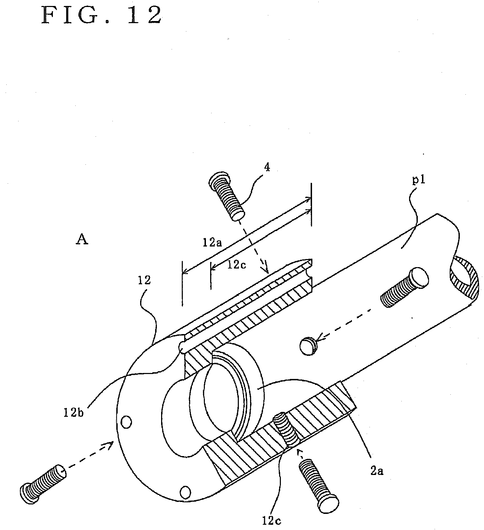

FIG. 12 shows EXAMPLE 10. This example refers to a flange coupling 12, which is the same as having changed a part of flange coupling 8 in the connecting structure 103 of EXAMPLE 4, and the same mark is referred to the same part substantially. A flange portion 12a, which has a bolt hole 12b for connecting with the other flange coupling, overlaps with a sleeve portion 12c. The hole h1 provided to the sleeve portion 12c and the bolt hole 12b are perforated as shifting so as not to interfere with one another. The flange coupling 12 can be considered to have the outer circumferential face of the flange portion 6 of EXAMPLE 4 just continued to the sleeve portion 1d (FIG. 7).

EXAMPLE 11

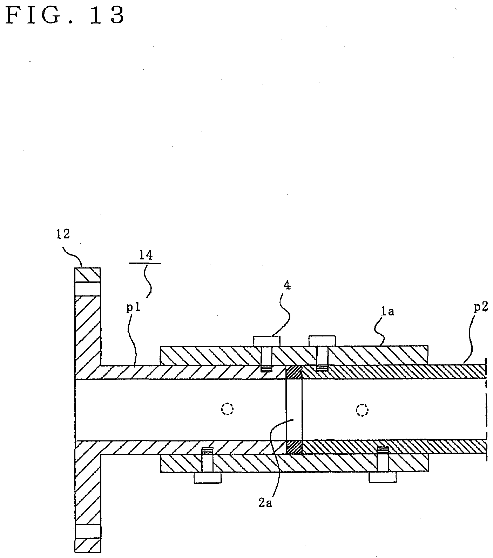

FIG. 13 shows EXAMPLE 11. This example refers to a flange coupling 14 having a flange portion to the pressure piping p1 of EXAMPLE 1. A connection with the pressure piping p2 conforms to EXAMPLE 1.

EXAMPLE 12

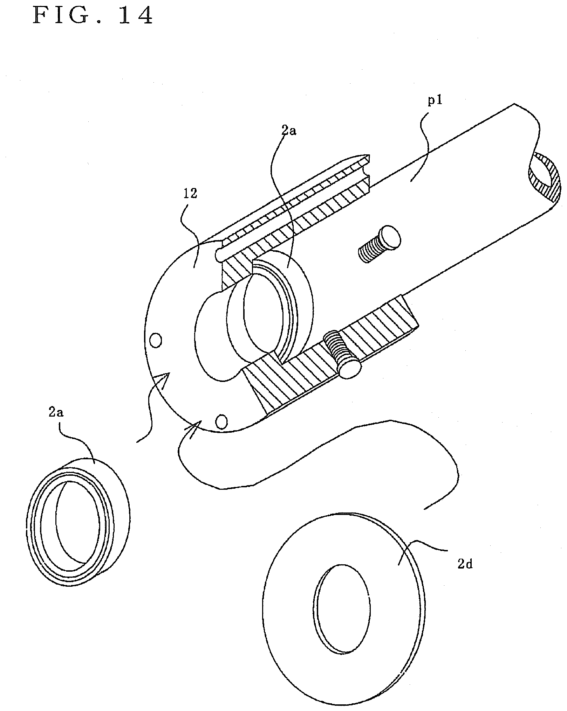

In FIG. 14, an insert 2a or a sheet packing 2d can be used to the flange coupling 12 in EXAMPLE 12 in order to connect to the other flange coupling.

EXAMPLE 13

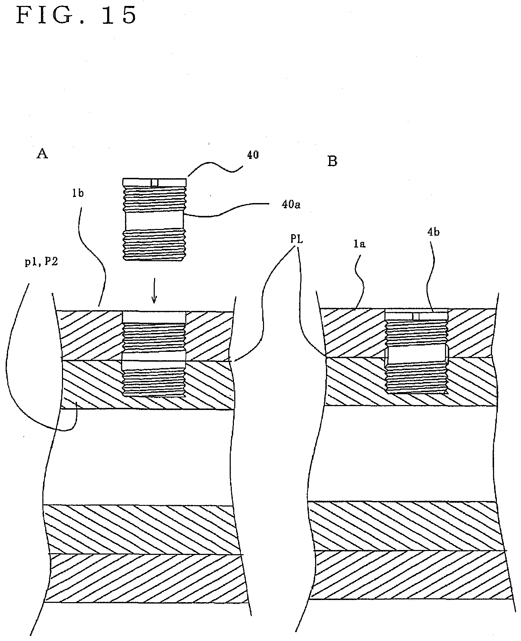

The bolt 4 connecting the pressure piping p1, p2 to the sleeve catches shear force to the contact surface with the sleeve and the pressure piping. FIG. 15 shows a bolt 40 whose strength for the shear force is strong. A shank portion 40a of the bolt 40, which is located in the contact surface PL, forms a straight curved surface without a screw thread.

EXAMPLE 14

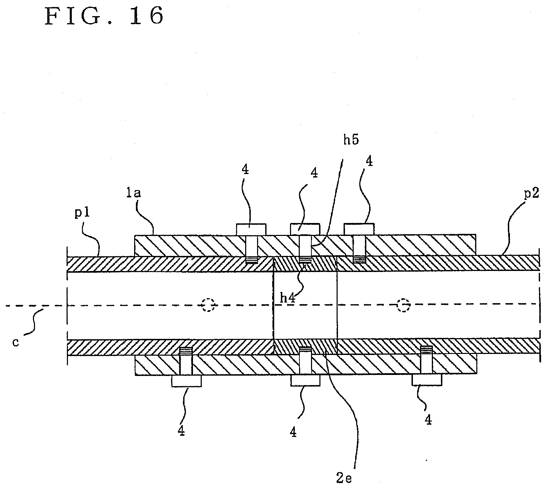

In addition, it may be constructed so that an insert can be connected to the sleeve with bolts. In FIG. 16, an insert 2e is formed into a pipe having the same inside diameter as the pressure piping p1, p2, having non-through threaded holes h4 on its outer surface. The sleeve 1a has through holes h5 at the positions corresponding to the threaded holes h4 (which can have screw threads), and the insert 2e is connected to the sleeve 1a with the bolts 4.
In this structure, when removing the pressure piping p2, all bolts 4 are removed, and the end of the pressure piping p2 is exposed by sliding the sleeve 1a on the drawing's left side. Therefore, the pressure piping p2 can be removed without changing the positional relationship of the pressure piping p1 installed in the spot.

EXAMPLE 15

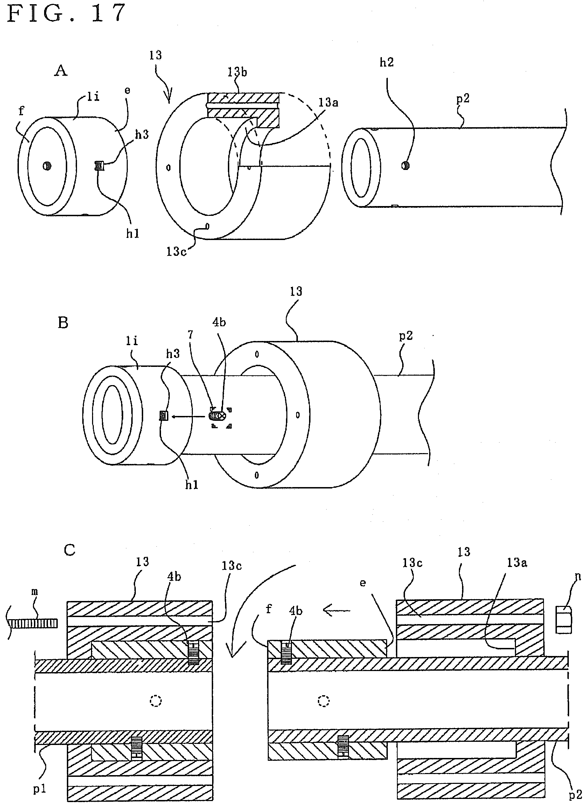

FIG. 17 shows the other example for connecting pressure piping with a loose coupling. In FIG. 17C, a cylindrical sleeve 1i has multiple through holes h1 provided at separate locations in the lengthwise direction, and with equiangular intervals and without overlapping in the circumferential direction as well as the sleeve 1a and so on of the former examples. However, the sleeve 1i extends to the end of the pressure piping p2 in length. On the other hand, a loose coupling 13 is used to connect the pressure piping p2 with the other. The loose coupling 13 has a flange portion 13a contacting on one end e of the sleeve 1i, a body portion 13b extending to the other end f side of the sleeve 1i through the outer surface of the sleeve 1i, and bolt holes 13c for connecting with the other. In the present invention, although the body portion 13b has a length extending to the other end f side of the sleeve 1i, it does not have to extend thereto.
First of all, the pressure piping p2 is put through the loose coupling 13 as shown in FIG. 17A, and then, the sleeve 1i is screwed on the pressure piping p2 with bolts 4 as shown in FIG. 17B (in the figure, the bolts 4b are shown). As for the bolts 4, a bolt whose head does not protrude from the outer surface of the sleeve 1i is used. The bolts 4b should be used with the detents 7. The pressure piping p2 has non-through threaded holes h2 at locations corresponding to the holes h1 as well as the former example. Likewise, the sleeve 1i is fixed on the pressure piping p1 with the bolts 4b, and the couplings are fixed with a bolt m and a nut n. Various inserts for sealing as shown with arrows in FIG 17C (such as a gasket, a packing, an O-ring and so on) are put between the pressure piping p1 and the pressure piping p2. The end surface of the pressure piping p2 (or the pressure piping p1) should act as a sealing face on which a sealing is located, and therefore, the sealing should be located on the end surface of the sleeve 1i or the loose coupling, or not. The partner coupling connecting with the loose coupling should be the flange coupling such as FIG. 7 or FIG. 12, or another form.

EXAMPLE 16

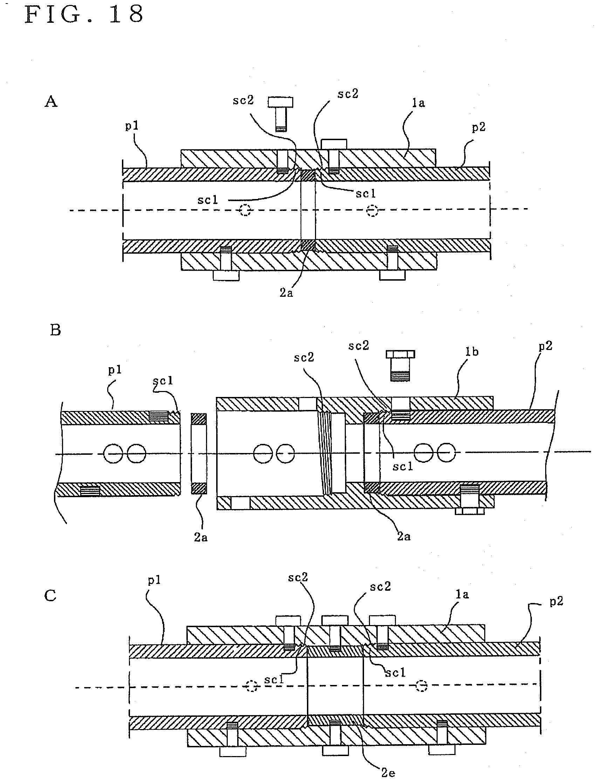

FIG. 18 shows an example, in which specified prestress is given to the insert 2a for sealing by screwing the pressure piping p1 (or p2) in the sleeves 1a, 1b. FIG. 18A shows an embodiment of FIG. 4A (EXAMPLE 1), FIG. 18B shows an embodiment of FIG. 5A (EXAMPLE 2), and FIG. 18C shows an embodiment of FIG. 16 (EXAMPLE 16), as one example, respectively. Screw threads sc1 are provided on the outer circumference of the pressure piping p1, p2, respectively, and screw threads sc2 screwing on the screw threads sc1 are provided on the inner circumference of the sleeves 1a, 1b, respectively. The inserts 2a, 2e have pressure applied on by screwing the pressure piping p1 or the pressure piping p2 into the sleeve 1a or the sleeve 1b. The prestress to sealing material of the inserts 2a, 2e can be given by adjusting the screwed length. The present invention can be applied to the case in which the sleeve portions 1d, 12c of the flange portions disclosed in the embodiments of FIG.7 (EXAMPLE 4) and the embodiment of FIG. 12 (EXAMPLE 10) are connected with the pressure piping p1 through the insert 2a.

If the insert 2a has the ring grooves b11, b12 with a depth to fit the O-ring when giving proper sealing pressure thereon, proper pressure comes to be spontaneously added on the O-ring by screwing the pressure piping p1 or the pressure piping p2 into the sleeve 1a or the sleeve 1b until the end face thereof contacts on the annular faces b1, b2 of the insert 2a.

EXAMPLE 17

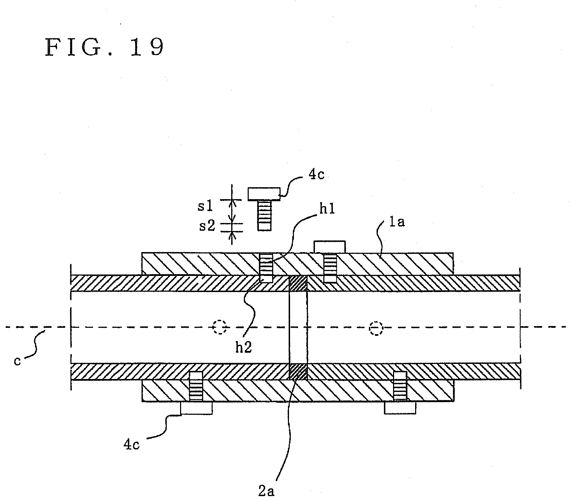

In EXAMPLE 8 shown in FIG. 10, the bolt 4a has had the screw thread on only a portion corresponding to the hole h2, but the portion may be formed columnar and the screw thread should be provided on only a portion corresponding to the hole h1. In FIG. 19, a bolt 4c has a screw thread on a portion s1 corresponding to the hole h1, and a portion s2 corresponding to the hole h2 is columnar. The pressure piping p1, p2 have no screw threads on the holes h2, and each hole h2 is a cylindrical non-through hole for inserting a columnar portion s2 of the bolt 4c. On the other hand, the sleeve 1a is the same one shown in FIG. 4. Further, the pressure piping p1, p2 have the insert 2a shown in the embodiment of FIG. 4 inserted therebetween. The O-ring 3 in the insert 2a can seal with necessary proper pressure by inserting the portion s2 of the bolt 4c into the hole h2 after locating the insert between the pressure piping p1 or the pressure piping p2 under compression. According to the present example, the hole h2 has an inner surface formed into a smooth column curved surface, and therefore, the pressure piping come to have high strength.

EXAMPLE 18

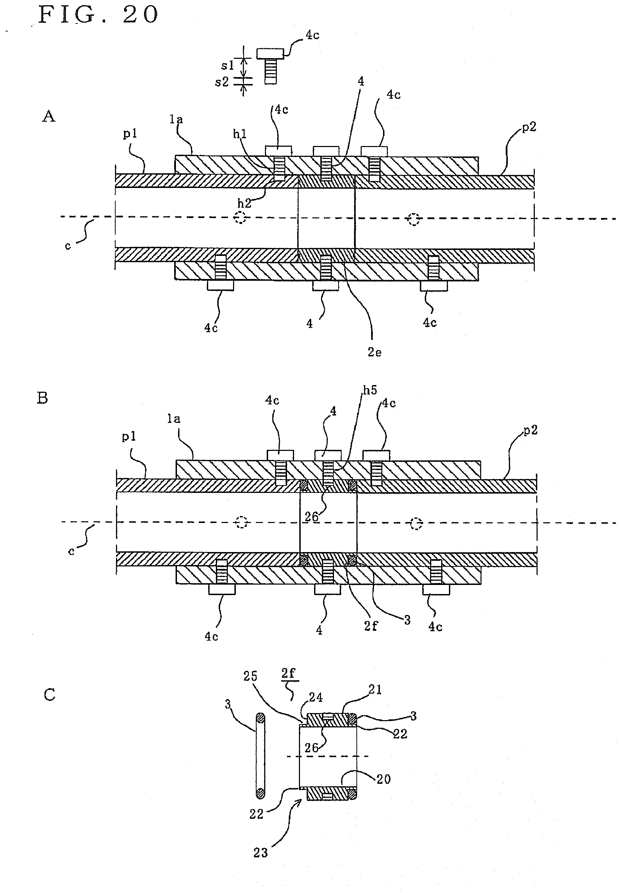

FIG. 20A shows an example for using the bolts 4c of FIG. 19 and connecting the pressure piping p1, p2 through the insert 2e (FIG. 16). In the present example, the insert 2e is fixed on the sleeve 1a, and thereafter, the portion s2 of the bolt 4c is inserted into the hole h2 in the situation where the O'rings of left and right of insert 2e are compressed with proper pressure by respectively pushing the pressure piping p1, p2 into the sleeve 1a.

EXAMPLE 19

FIG. 20C shows an insert 2f reformed for a thick O-ring.

FIG. 20B shows the situation that the pressure piping p1, p2 are connected through the inset 2f.

The insert 2f is a form of ring, its inner circumferential surface 20 has a diameter same as the internal circumferential surface of the pressure piping p1, and its outer circumferential surface 21 has a diameter slightly smaller than the outer circumferential surface of the sleeve 1a. There are step-shaped grooves 23 sinking in a concentric circle form from the outer circumferential surface 21 of the insert 2f to the right and left end faces 22 thereof. A step-shaped groove 23 has a doughnut face 24 in parallel to the radial direction and a ring face 25 in parallel to the centerline.

Besides, in the insert 2f, if the ring face 25 is set in width such that the O-ring 3 just sinks in the height of the end face 22 when proper sealing pressure is added on the O-ring 3, the proper pressure is spontaneously added on the O-ring 3 by pushing the pressure piping p1 or the pressure piping p2 into the sleeve 1a or the sleeve 1b until its end face hits on the end face 22.

The insert 2f has non-through holes 26 that are used to fix to the sleeve 1a. The sleeve 1a has holes 5 passing from the outer circumferential surface to the inner circumferential surface. The holes 5 are connected to the holes 26 of the insert 2f with the bolts 4.

When fixing the insert 2f to the sleeve 1a with the bolts 4, the inner circumferential surfaces of the doughnut face 24, the ring face 25 and the sleeve 1a form the bottom face and both side faces of the groove for the O-ring 3, respectively.

A thick O-ring is superior in stabilizing seal characteristics because it has small compression set in the case of constant compressibility. According to the present example, it is possible to use the thick O-ring. Besides, the bolts 4c were used because the pressure piping p1, p2 have no screw threads in the holes. However, the holes h2 should have screw threads, and in that case, the bolts 4 are used.

Besides, in the insert 2f, if the ring face 25 is set in width such that the O-ring just sinks in the width of the ring face when the proper seal pressure is added on the O-ring 3, the proper pressure is spontaneously added on the O-ring 3 by pushing the pressure piping p1 or p2 into the sleeve 1a or 1b until its end face hits on the end face 22.

EXAMPLE 20

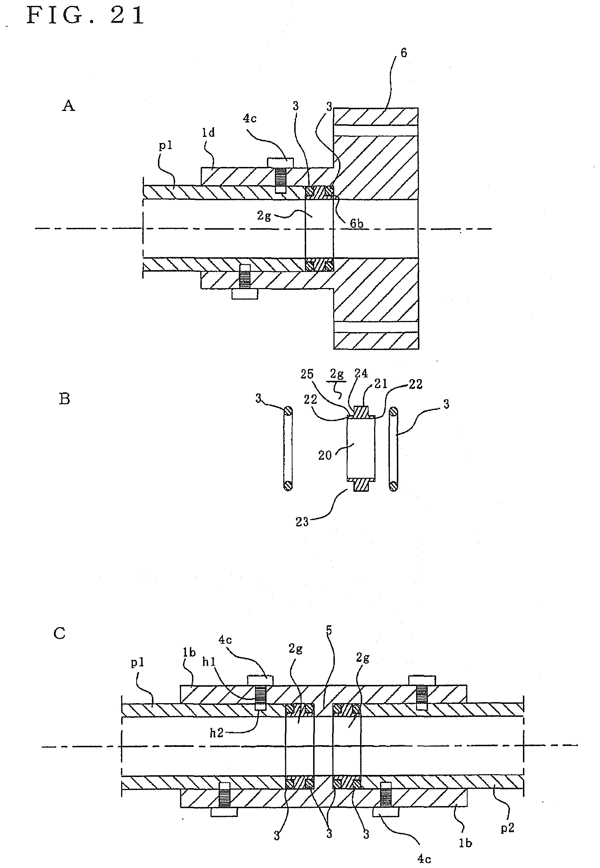

FIG. 21A shows an example in which an insert 2g (FIG. 21B) is adapted to the connecting structure 103 of EXAMPLE 4 (FIG. 7). The insert 2g is formed in a ring as the insert 2f, its inner circumferential surface 20 has the same diameter as the inner circumferential surface of the pressure piping p1, and its outer circumferential surface 21 has a diameter smaller than the inner circumferential surface of the sleeve 1d to some extent. A concentrically hollow step-shaped groove 23 is provided between the outer circumferential surface 21 and the both end faces 22. The step-shaped groove 23 has a doughnut face 24 in parallel to the radial direction and the ring face 25 in parallel to the centerline. The insert 2g has no non-through hole 26 such as shown in the insert 2f. The insert 2g does not need to be fixed because it is sandwiched between the neck portion 6b and the pressure piping p1. The holes h2 of the pressure piping p1, p2 should have screw threads. In that case, the bolts 4 are used.

EXAMPLE 21

FIG. 21C shows a modification of the connecting structure 101 of EXAMPLE 2 in FIG. 5. In FIG. 21C, the screw thread is provided to the hole h1 of the sleeve 1b, and not provided to the holes h2 of the pressure piping p1, p2, respectively. A ring-shaped neck portion 5 protrudes from the inner circumferential surface of the sleeve 1b, and the insert 2f is placed thereon. The sleeve 1b is connected to the pressure piping p1, p2 with the bolt 4c (FIG. 19). The O-ring of the insert 2g is compressed as mentioned previously. Since the holes h2 has no screw threads, the bolts 4c are used. However, the holes h2 should have screw threads. In that case, the bolts 4 are used.

EXAMPLE 22

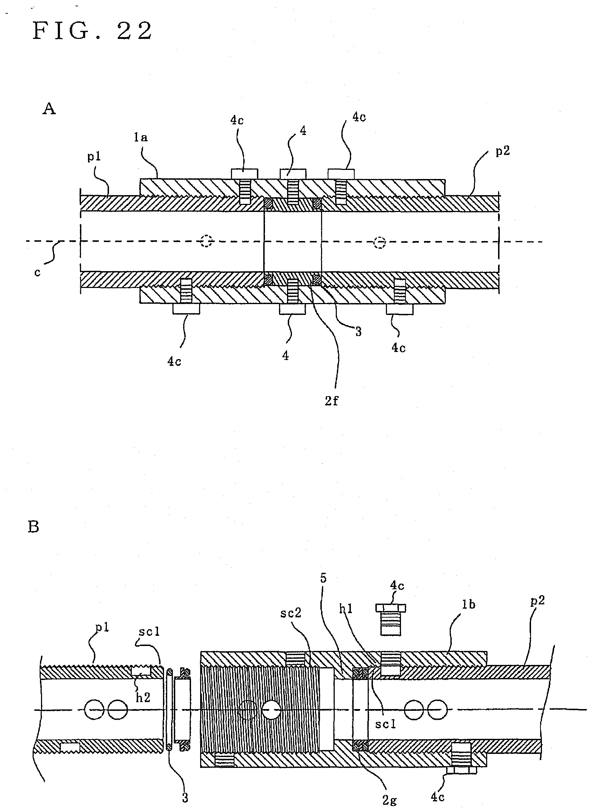

FIG. 22 shows a modification of EXAMPLE 16 in FIG. 18. In this example, the O-ring 3 is compressed by screwing the pressure piping p1 (or p2) into the sleeve to the insert 2f or 2g which seals like FIG. 16. Screw threads sc2 are provided to the full length of the inner circumferential surfaces of the sleeve 1a, 1b including the portion of the hole h1. On the other hand, screw threads sc1 that screw together with the screw threads sc2 are provided to the outer circumferential surfaces of the pressure piping p1, p2. Pressure is put on the insert 2f or 2g by screwing the pressure piping p1 or p2 into the sleeve 1a or 1b. Prestress is added to the O-ring by adjusting amount of engagement.

In making the ring face 25 of the insert 2g in such the width that the O-ring 3 fits in completely with proper seal pressure, the proper pressure is spontaneously added to the O-ring 3 by pushing the pressure piping p1 or p2 into the sleeve 1a or 1b till its end face collides with the end face 22 of the insert 2g. Since the screw threads are not formed to the holes 2 of the pressure piping p1, p2, the bolts 4c are used. However, the holes h2 should have screw threads. In that case, the bolts 4 are used.

In a further aspect, a connecting structure for pressure piping in which pressure piping flowing pressurized fluid are connected comprises a cylindrical sleeve having a plurality of through holes, an insert for sealing the pressure piping, and a plurality of bolts. The through holes are provided at separate locations in a lengthwise direction and with identical angular intervals and without overlapping in a circumferential direction. The cylindrical sleeve has the pressure piping inserted into an interior from both ends. The insert for sealing the pressure piping is located in an interior space of the sleeve with sandwiched between the pressure piping. The plurality of bolts are inserted into the holes of the sleeve, wherein said pressure piping have non-through holes each having screw thread at locations corresponding to the holes of the sleeve. When inserting the pressure piping inserted into the interior space of the sleeve, the non-through holes of the pressure piping are communicated to the holes of the sleeve respectively and said bolts are screwed on the screw threads of the pressure piping through the holes of the sleeve. The connecting structure further comprises an adhesive filling between the outer circumferential surface of the pressure piping inserted into the sleeve and an opposing surface of the interior space of the sleeve.

In some examples, the pressure piping have circumferences of said non-through holes quenched.

In another aspect, a connecting structure for pressure piping in which pressure piping flowing pressurized fluid is connected with a flange coupling is disclosed. The flange coupling has a cylindrical interior space for inserting the pressure piping, and a plurality of through holes provided at separate locations in a lengthwise direction and with identical angular intervals and without overlapping in a circumferential direction of the interior space one another toward the interior space. Further, the connecting structure comprises a plurality of bolts for being inserted into the holes of the flange coupling, wherein said pressure piping have non-through holes each having screw thread at locations corresponding to the holes of the flange coupling, when inserting the pressure piping into the interior space of the flange coupling. The non-through holes communicates to the holes of the flange coupling respectively and said bolts are screwed on the screw threads of the pressure piping through the holes of the flange coupling. The flange coupling further comprises an inner circumferential surface forming a narrow path in concentric with the interior space, an annular face provided between said inner circumferential surface and said interior space, and an insert for sealing. The insert is put between the end portion of the pressure piping and said annular face. In such case, each of said inserts has an outer circumferential surface formed into a male taper face with a diameter gradually smaller toward the annular face, and said flange coupling has an inner circumferential surface in which a portion surrounding the male taper face is formed into a female taper face with a diameter gradually smaller toward the annular face.

In another aspect, a connecting structure for pressure piping in which pressurized fluid flows comprises a cylindrical sleeve having a plurality of through holes, and a plurality of bolts for being inserted into the holes of the sleeve. The through holes are provided at separate locations in a lengthwise direction and with identical angular intervals and without overlapping in a circumferential direction. The cylindrical sleeve has an interior space for inserting the pressure piping from both ends. The pressure piping have non-through holes each having screw thread at locations corresponding to the holes of the sleeve. When inserting the pressure piping inserted into the interior space of the sleeve, the non-through holes of the pressure piping are communicated to the holes of the sleeve respectively and said bolts are screwed on the screw threads of the communicated sleeve. The insert has an outer circumferential surface facing to the inner circumferential surface of the sleeve, left and right end faces, an inner circumferential surface with a diameter as large as the inner circumferential surface of the pressure piping, and a step-shaped groove having a doughnut face along a radial direction and a ring face along a centerline direction in a concentric hollow from said outer circumferential surface to said left and right end faces. An O-ring for being fitted into the step-shaped groove of the insert contacts to the end face of the pressure piping in a space surrounded by the inner circumferential surface of the sleeve and the step-shaped groove of the insert.

EXPLANATION OF REFERENCED NUMERALS

| | |
|---|---|
| 100 to 105 | connecting structure |
| 1, 1a to 1i | sleeve or sleeve portion |
| 2 | insert |
| 3 | O-ring |
| 4, 4a | bolt |
| 5 | neck portion |
| 6 | flange portion |
| 7 | detent |
| 8 | flange coupling |
| p1 | pressure piping |
| p2 | pressure piping |

**Claims**

1.  A connecting structure (100; 101; 102; 103; 104; 105) comprising:

    pressure piping (p1, p2) in which pressurized fluid flows;
    a cylindrical sleeve (1; 1a; 1b; 1c; 1d; 1e; 1f; 1g; 1h; 1i) having a plurality of through holes (h1; h5), said through holes (h1; h5) being provided at separate locations in a lengthwise direction and with identical angular intervals and without overlapping in a circumferential direction, said cylindrical sleeve (1; 1a; 1b; 1c; 1d; 1e; 1f; 1g; 1h; 1i) having an interior space for inserting the pressure piping (p1, p2) from both ends; and
    a plurality of bolts (4a; 4c; 4d; 40) for being inserted into the holes (h1; h5) of the sleeve (1; 1a; 1b; 1c; 1d; 1e; 1f; 1g; 1h; 1i),
    **characterized in that** said pressure piping (p1, p2) have non-through holes (h2; h4) each having screw thread at locations corresponding to the holes (h1; h5) of the sleeve (1; 1a; 1b; 1c; 1d; 1e; 1f; 1g; 1h; 1i), when inserting the pressure piping (p1, p2) inserted into the interior space of the sleeve (1; 1a; 1b; 1c; 1d; 1e; 1f; 1g; 1h; 1i), the non-through holes (h2; h4) of the pressure piping (p1, p2) are communicated to the holes (h1; h5) of the sleeve (1; 1a; 1b; 1c; 1d; 1e; 1f; 1g; 1h; 1i) respectively and said bolts (4a; 4c; 4d; 40) are screwed on the screw threads of the pressure piping (p1, p2) through the holes of the sleeve.

2. The connecting structure (100; 101; 102; 103; 104; 105) for pressure piping (p1, p2) of claim 1, further comprising an insert (2a; 2b; 2e; 2f; 2g) for sealing the pressure piping (p1, p2), said insert (2a; 2b; 2e; 2f; 2g) being located in an interior space of the sleeve (1; 1a; 1b; 1c; 1d; 1e; 1f; 1g; 1h; 1i) with sandwiched between the pressure piping (p1, p2).

3. The connecting structure (100; 101; 102; 103; 104; 105) for pressure piping (p1, p2) as claimed in claim 1, wherein the sleeve (1; 1a; 1b; 1c; 1d; 1e; 1f; 1g; 1h; 1i) has a neck portion (5; 5a; 6b) at a location facing to an end of the inserted pressure piping (p1, p2), said neck portion (5; 5a; 6b) having a diameter smaller than another location of the interior space, inserts (2a; 2b; 2e; 2f; 2g)being inserted from both ends of the sleeve (1; 1a; 1b; 1c; 1d; 1e; 1f; 1g; 1h; 1i), and each insert (2a; 2b; 2e; 2f; 2g) being sandwiched between an end of corresponding pressure piping (p1, p2) and the neck portion (5; 5a; 6b).

4. The connecting structure (100; 101; 102; 103; 104; 105) for pressure piping (p1, p2) as claimed in claim 2, wherein said insert (2a; 2b; 2e; 2f; 2g) has a pair of opposing annular faces (b1; b2), annular ring grooves (b11; b21) formed respectively in the annular faces (b1; b2), and O-rings (3) fitted into the ring grooves (b11; b21).

5. The connecting structure (100; 101; 102; 103; 104; 105) for pressure piping (p1, p2) as claimed in claim 3, wherein each of said inserts (2a; 2b; 2e; 2f; 2g) has an outer circumferential surface (21) formed into a male taper face with a diameter gradually smaller toward the neck portion (5; 5a; 6b), and said sleeve (1; 1a; 1b; 1c; 1d; 1e; 1f; 1g; 1h; 1i), has an inner circumferential surface (20) in which a portion surrounding the male taper face is formed into a female taper face with a diameter gradually smaller toward the neck portion (5; 5a; 6b).

6. The connecting structure (100; 101; 102; 103; 104; 105) for pressure piping (p1, p2) as claimed in claim 1, further comprising a flange portion (6; 9, 12a, 13a) forming together with the sleeve (1; 1a; 1b; 1c; 1d; 1e; 1f; 1g; 1h; 1i) a flange coupling (8; 11; 12; 14).

7. The connecting structure (100; 101; 102; 103; 104; 105) for pressure piping (p1, p2) as claimed in claim 6, wherein said pressure piping (p1, p2) inserted into the interior space of the flange coupling (8; 11; 12; 14) has an end portion overlooking a face for being connected to the pressure piping (p1, p2) of other coupling side through the interior space of the flange coupling (8; 11; 12; 14).

8. The connecting structure (100; 101; 102; 103; 104; 105) for pressure piping (p1, p2) as claimed in claim 6, wherein said flange coupling (8; 11; 12; 14) comprises:

   an inner circumferential surface forming a narrow path in concentric with the interior space;
   an annular face (6b) provided between said inner circumferential surface and said interior space; and
   an insert (2a; 2b; 2e; 2f; 2g) for sealing, said insert (2a; 2b; 2e; 2f; 2g) being put between the end portion of the pressure piping (p1, p2) and said annular face (6b).

9. The connecting structure (100; 101; 102; 103; 104; 105) for pressure piping (p1, p2) of claim 3, further comprising:

   an annular ring groove (b11, b21) on each of annular faces of both sides of the neck portion (5; 5a; 6b);
   O-rings (3) for being fitted into said ring grooves (b11, b21).

10. The connecting structure (100; 101; 102; 103; 104; 105) for pressure piping (p1, p2) as claimed in claim 1, wherein each of said bolts (4a; 4c; 4d; 40) further comprises:

    a head having a notch (r); and
    a detent (7) for fixing a relative position with the sleeve (1; 1a; 1b; 1c; 1d; 1e; 1f; 1g; 1h; 1i),
    wherein the detent (7) is inserted into the notch (r) when the bolt (4a; 4c; 4d; 40) is inserted into the hole (h1; h5) of the sleeve (1; 1a; 1b; 1c; 1d; 1e; 1f; 1g; 1h; 1i).

11. The connecting structure (100; 101; 102; 103; 104; 105) for pressure piping (p1, p2) as claimed in claim 1, further comprising:
    a loose coupling (13) having a flange portion (13a) contacting on one end of the sleeve (1; 1a; 1b; 1c; 1d; 1e; 1f;

1g; 1h; 1i) and a body portion (13b) extending to an other end side of the sleeve (1; 1a; 1b; 1c; 1d; 1e; 1f; 1g; 1h; 1i) through an outer circumferential surface of the sleeve (1; 1a; 1b; 1c; 1d; 1e; 1f; 1g; 1h; 1i).

12. The connecting structure (100; 101; 102; 103; 104; 105) for pressure piping (p1, p2) as claimed in claim 2, wherein said insert (2a; 2b; 2e; 2f; 2g) has non-through threaded holes (h2; h4) on an outer surface, said non-through threaded holes (h2; h4) being provided to locations corresponding to the through holes (h1; h5) of the sleeve (1; 1a; 1b; 1c; 1d; 1e; 1f; 1g; 1h; 1i), and the insert (2a; 2b; 2e; 2f; 2g) is provided to the sleeve (1; 1a; 1b; 1c; 1d; 1e; 1f; 1g; 1h; 1i) through the through holes (h1; h5) with the bolts (4a; 4c; 4d; 40).

13. The connecting structure (100; 101; 102; 103; 104; 105) for pressure piping (p1, p2) as claimed in claim 1, wherein each of said pressure piping (p1, p2) has an outer circumferential surface with a screw thread (sc2) and said sleeve (1; 1a; 1b; 1c; 1d; 1e; 1f; 1g; 1h; 1i) has a screw thread (sc1) to be screwed together the screw thread (sc2) of the pressure piping (p1; p2), and pressure is applied on the insert by screwing the pressure piping (p1; p2) into the sleeve (1; 1a; 1b; 1c; 1d; 1e; 1f; 1g; 1h; 1i).

14. The connecting structure (100; 101; 102; 103; 104; 105) for pressure piping (p1, p2) as claimed in claim 1, wherein said bolts (4a; 4c; 4d; 40) are screwed on the screw threads of the communicated sleeve (1; 1a; 1b; 1c; 1d; 1e; 1f; 1g; 1h; 1i).

15. The connecting structure (100; 101; 102; 103; 104; 105) for pressure piping (p1; p2) as claimed in claim 14, wherein each pressure piping (p1; p2) has non-through holes (h2; h4) each having a cylindrical smooth inner circumferential surface, each of said bolts (4a; 4c; 4d; 40) has a portion to be inserted into the non-through hole (h2; h4) without a screw thread, and when the pressure piping (p1, p2) is inserted into the interior space of the sleeve (1; 1a; 1b; 1c; 1d; 1e; 1f; 1g; 1h; 1i), the pressure piping (p1, p2) fits the sleeve (1; 1a; 1b; 1c; 1d; 1e; 1f; 1g; 1h; 1i) by communicating the holes (h2; h4) of the pressure piping to the holes (h1; h5) of the sleeve (1; 1a; 1b; 1c; 1d; 1e; 1f; 1g; 1h; 1i).


**Patentansprüche**

1. Verbindungsstruktur (100; 101; 102; 103; 104; 105), mit:

   Druckleitungen (p1, p2), in denen ein mit Druck beaufschlagtes Fluid strömt;
   einer zylindrischen Hülse (1; 1a; 1b; 1c; 1d; 1e; 1f, 1g; 1h; 1i) mit mehreren Durchgangslöchern (h1; h5), wobei die Durchgangslöcher (h1; h5) an getrennten Stellen in einer Längsrichtung und mit identischen winkligen Abständen und ohne Überlappung in einer Umfangsrichtung vorgesehen sind, wobei die zylindrische Hülse (1; 1a; 1b; 1c; 1d; 1e; 1f; 1g; 1h; 1i) einen Innenraum zum Einführen der Druckleitungen (p1, p2) über beide Enden aufweist; und
   einer Vielzahl von Bolzen (4a; 4c; 4d; 40) zum eingeführt Werden in die Löcher (h1; h5) der Hülse (1; 1a; 1b; 1c; 1d; 1e; 1f; 1g; 1h; 1i),
   **dadurch gekennzeichnet, dass** die Druckleitungen (p1, p2) Nicht-Durchgangslöcher (h2; h4), von denen jedes ein Schraubgewinde aufweist, an Stellen aufweisen, die den Löchern (h1; h5) der Hülse (1; 1a; 1b; 1c; 1d; 1e; 1f; 1g; 1h; 1i) entsprechen, wenn die in den Innenraum der Hülse (1; 1a; 1b; 1c; 1d; 1e; 1f; 1g; 1h; 1i) eingeführten Druckleitungen (p1, p2) eingeführt werden, die Nicht-Durchgangslöcher (h2; h4) der Druckleitungen (p1, p2) mit den Löchern (h1; h5) der Hülse (1; 1a; 1b; 1c; 1d; 1e; 1f; 1g; 1h; 1i) entsprechend verbunden sind und die Bolzen (4a; 4c; 4d; 40) an die Schraubgewinde der Druckleitung (p1, p2) durch die Löcher der Hülse geschraubt werden.

2. Verbindungsstruktur (100; 101; 102; 103; 104; 105) für Druckleitungen (p1, p2) nach Anspruch 1, ferner mit einem Einsatz (2a; 2b; 2e; 2f; 2g) zum Abdichten der Druckleitungen (p1, p2), wobei der Einsatz (2a; 2b; 2e; 2f; 2g) sich in einem Innenraum der Hülse (1; 1a; 1b; 1c; 1d; 1e; 1f; 1g; 1h; 1i) zwischen den Druckleitungen (p1, p2) angeordnet befindet.

3. Verbindungsstruktur (100; 101; 102; 103; 104; 105) für Druckleitungen (p1, p2) nach Anspruch 1, bei der die Hülse (1; 1a; 1b; 1c; 1d; 1e; 1f; 1g; 1h; 1i) einen Kragenbereich (5; 5a; 6b) an einer Stelle aufweist, die auf ein Ende der eingeführten Druckleitungen (p1, p2) gerichtet ist, wobei der Kragenbereich (5; 5a; 6b) einen Durchmesser aufweist, der geringer als eine andere Stelle des Innenraums ist, die Einsätze (2a; 2b; 2e; 2f; 2g) über beide Enden der Hülse (1; 1a; 1b; 1c; 1d; 1e; 1f; 1g; 1h; 1i) eingeführt werden und jeder Einsatz (2a; 2b; 2e; 2f; 2g) zwischen einem Ende einer entsprechenden Druckleitung (p1, p2) und dem Kragenbereich (5; 5a; 6b) angeordnet ist.

4. Verbindungsstruktur (100; 101; 102; 103; 104; 105) für Druckleitungen (p1, p2) nach Anspruch 2, bei der der Einsatz (2a; 2b; 2e; 2f; 2g) ein Paar gegenüberliegender ringförmiger Flächen (b1; b2), ringförmige Ringnuten (b11; b21), die entsprechend in den ringförmigen Flächen (b1; b2) ausgebildet sind, und O-Ringe (3), die in die Ringnuten (b11; b21) eingesetzt sind, aufweist.

5. Verbindungsstruktur (100; 101; 102; 103; 104; 105) für Druckleitungen (p1, p2) nach Anspruch 3, bei der jeder der Einsätze (2a; 2b; 2e; 2f; 2g) eine äußere Umfangsfläche (21) aufweist, die in eine zulaufende Außenfläche geformt ist, bei der ein Durchmesser in Richtung zu dem Kragenbereich (5; 5a; 6b) fortlaufend geringer wird, und die Hülse (1; 1a; 1b; 1c; 1d; 1e; 1f; 1g; 1h; 1i) eine innere Umfangsfläche (20) aufweist, bei der ein Bereich, der die zulaufende Außenfläche umgibt, in eine zulaufende Innenfläche geformt ist, bei der ein Durchmesser in Richtung des Kragenbereichs (5; 5a; 6b) fortlaufend geringer wird.

6. Verbindungsstruktur (100; 101; 102; 103; 104; 105) für Druckleitungen (p1, p2) nach Anspruch 1, ferner mit einem Flanschbereich (6; 9, 12a, 13a), der zusammen mit der Hülse (1; 1a; 1b; 1c; 1d; 1e; 1f; 1g; 1h; 1i) eine Flanschkupplung (8; 11; 12; 14) bildet.

7. Verbindungsstruktur (100; 101; 102; 103; 104; 105) für Druckleitungen (p1, p2) nach Anspruch 6, bei der die Druckleitung (p1, p2), die in den Innenraum der Flanschkupplung (8; 11; 12; 14) eingeführt ist, einen Endbereich aufweist, der über eine Fläche hinausschaut, so dass er mit der Druckleitung (p1, p2) der anderen Kupplungsseite durch den Innenraum der Flanschkupplung (8; 11; 12; 14) verbunden wird.

8. Verbindungsstruktur (100; 101; 102; 103; 104; 105) für Druckleitungen (p1, p2) nach Anspruch 6, bei der die Flanschkupplung (8; 11; 12; 14) aufweist:

    eine innere Umfangsfläche, die einen engen Weg konzentrisch zu dem Innenraum ausbildet;
    eine ringförmige Fläche (6b), die zwischen der inneren Umfangsfläche und dem Innenraum vorgesehen ist; und
    einen Einsatz (2a; 2b; 2e; 2f; 2g) zum Abdichten, wobei der Einsatz (2a; 2b; 2e; 2f; 2g) zwischen den Endbereich der Druckleitung (p1, p2) und die ringförmige Fläche (6b) eingesetzt ist.

9. Verbindungsstruktur (100; 101; 102; 103; 104; 105) für Druckleitungen (p1, p2) nach Anspruch 3, ferner mit:

    einer ringförmigen Ringnut (b11, b21) auf jeder der ringförmigen Flächen beider Seiten des Kragenbereichs (5; 5a; 6b);
    O-Ringen (3) zum eingesetzt Werden in die Ringnuten (b11, b21).

10. Verbindungsstruktur (100; 101; 102; 103; 104; 105) für Druckleitungen (p1, p2) nach Anspruch 1, bei der jeder der Bolzen (4a; 4c; 4d; 40) ferner aufweist:

    einen Kopf mit einer Kerbe (r); und
    eine Feststellvorrichtung (7) zum Fixieren einer Relativposition zu der Hülse (1; 1a; 1b; 1c; 1d; 1e; 1f; 1g; 1h; 1i), bei der die Feststellvorrichtung (7) in die Kerbe (r) eingeführt wird, wenn der Bolzen (4a; 4c; 4d; 40) in das Loch (h1; h5) der Hülse (1; 1a; 1b; 1c; 1d; 1e; 1f; 1g; 1h; 1i) eingesetzt wird.

11. Verbindungsstruktur (100; 101; 102; 103; 104; 105) für Druckleitungen (p1, p2) nach Anspruch 1, ferner mit: einer losen Kupplung (13) mit einem Flanschbereich (13a), der ein Ende der Hülse (1; 1a; 1b; 1c; 1d; 1e; 1f; 1g; 1h; 1i) berührt, und einem Körperbereich (13b), der sich zu einer anderen Seite der Hülse (1; 1a; 1b; 1c; 1d; 1e; 1f; 1g; 1h; 1i) durch eine äußere Umfangsfläche der Hülse (1; 1a; 1b; 1c; 1d; 1e; 1f; 1g; 1h; 1i) erstreckt.

12. Verbindungsstruktur (100; 101; 102; 103; 104; 105) für Druckleitungen (p1, p2) nach Anspruch 2, bei der der Einsatz (2a; 2b; 2e; 2f; 2g) Nicht-Durchgangsgewindelöcher (h2; h4) auf einer Außenfläche aufweist, wobei die Nicht-Durchgangsgewindelöcher (h2; h4) an Stellen vorgesehen sind, die den Durchgangslöchern (h1; h5) der Hülse (1; 1a; 1b; 1c; 1d; 1e; 1f; 1g; 1h; 1i) entsprechen, und der Einsatz (2a; 2b; 2e; 2f; 2g) an der Hülse (1; 1a; 1b; 1c; 1d; 1e; 1f; 1g; 1h; 1i) über die Durchgangslöcher (h1; h5) mit den Bolzen (4a; 4c; 4d; 40) vorgesehen ist.

13. Verbindungsstruktur (100; 101; 102; 103; 104; 105) für Druckleitungen (p1, p2) nach Anspruch 1, bei der jede der Druckleitungen (p1, p2) eine äußere Umfangsfläche mit einem Schraubgewinde (sc2) aufweist und die Hülse (1; 1a; 1b; 1c; 1d; 1e; 1f; 1g; 1h; 1i) ein Schraubgewinde (sc1) aufweist, so dass sie mit dem Schraubgewinde (sc2) der Druckleitungen (p1; p2) zusammengeschraubt wird, und ein Druck auf den Einsatz durch Einschrauben der Druckleitungen (p1; p2) in die Hülse (1; 1a; 1b; 1c; 1d; 1e; 1f; 1g; 1h; 1i) aufgebracht wird.

14. Verbindungsstruktur (100; 101; 102; 103; 104; 105) für Druckleitungen (p1, p2) nach Anspruch 1, bei der die Bolzen (4a; 4c; 4d; 40) auf die Schraubgewinde der verbundenen Hülse (1; 1a; 1b; 1c; 1d; 1e; 1f; 1g; 1h; 1i) geschraubt sind.

15. Verbindungsstruktur (100; 101; 102; 103; 104; 105) für Druckleitungen (p1; p2) nach Anspruch 14, bei der jede Druckleitung (p1; p2) Nicht-Durchgangslöcher (h2; h4) aufweist, von denen jedes eine zylindrische glatte innere Umfangsfläche aufweist, wobei jeder der Bolzen (4a; 4c; 4d; 40) einen Bereich aufweist, der in das Nicht-Durchgangsloch (h2; h4) ohne ein Schraubgewinde einzuführen ist, und, wenn die Druckleitungen (p1, p2) in den Innenraum der Hülse (1; 1a; 1b; 1c; 1d; 1e; 1f; 1g; 1h; 1i) eingesetzt werden, die Druckleitungen (p1, p2) an der Hülse (1; 1a; 1b; 1c; 1d; 1e; 1f; 1g; 1h; 1i) durch Verbinden der Löcher (h2; h4) der Druckleitungen mit den Löchern (h1; h5) der Hülse (1; 1a; 1b; 1c; 1d; 1e; 1f; 1g; 1h; 1i) angebracht werden.

## Revendications

1. Structure de raccord (100 ; 101 ; 102 ; 103 ; 104 ; 105) comprenant :

une tuyauterie sous pression (p1, p2) dans laquelle du fluide pressurisé s'écoule ;
un manchon cylindrique (1 ; 1a ; 1b ; 1c ; 1d ; 1e ; 1f ; 1g ; 1h ; 1i) présentant une pluralité de trous débouchants (h1 ; h5), lesdits trous débouchants (h1 ; h5) étant prévus sur des emplacements séparés dans une direction longitudinale et avec des intervalles angulaires identiques et sans recouvrement dans une direction circonférentielle, ledit manchon cylindrique (1 ; 1a ; 1b ; 1c ; 1d ; 1e ; 1f ; 1g; 1h ; 1i) présentant un espace intérieur pour l'insertion de 1a tuyauterie sous pression (p1, p2) depuis les deux extrémités ; et
une pluralité de boulons (4a ; 4c ; 4d ; 40) destinés à être insérés dans les trous (h1 ; h5) du manchon (1; 1a ; 1b ; 1c ; 1d ; 1e ; 1f; 1g ; 1h ; 1i),
**caractérisée en ce que** ladite tuyauterie sous pression (p1, p2) présente des trous non débouchants (h2 ; h4) présentant chacun un filet de vis sur des emplacements correspondant aux trous (h1 ; h5) du manchon (1 ; 1a ; 1b ; 1c ; 1d ; 1e ; 1f ; 1g ; 1h ; 1i) lors de l'insertion de la tuyauterie sous pression (p1 ; p2) insérée dans l'espace intérieur du manchon (1 ; 1a ; 1b ; 1c ; 1d ; 1e ; 1f ; 1g ; 1h ; 1i), les trous non débouchants (h2 ; h4) de la tuyauterie sous pression (p1, p2) sont en communication avec les trous (h1 ; h5) du manchon (1 ; 1a ; 1b ; 1c ; 1d ; 1e ; 1f ; 1g ; 1h ; 1i) respectivement et lesdits boulons (4a ; 4c ; 4d ; 40) sont vissés sur les filets de vis de la tuyauterie sous pression (p1, p2) au travers des trous du manchon.

2. Structure de raccord (100 ; 101 ; 102 ; 103 ; 104 ; 105) pour une tuyauterie sous pression (p1, p2) selon la revendication 1, comprenant en outre un insert (2a ; 2b ; 2e ; 2f ; 2g) pour rendre étanche la tuyauterie sous pression (p1, p2), ledit insert (2a ; 2b ; 2e; 2f; 2g) étant situé dans un espace intérieur du manchon (1 ; 1a ; 1b ; 1c ; 1d ; 1e ; 1f ; 1g ; 1h ; 1i) pris en sandwich entre la tuyauterie sous pression (p1, p2).

3. Structure de raccord (100 ; 101 ; 102 ; 103 ; 104 ; 105) pour une tuyauterie sous pression (p1, p2) selon la revendication 1, dans laquelle le manchon (1 ; 1a ; 1b ; 1c; 1d ; 1e; 1f; 1g ; 1h ; 1i) présente une portion de cou (5 ; 5a ; 6b) sur un emplacement faisant face à une extrémité de la tuyauterie sous pression insérée (p1, p2), ladite portion de cou (5 ; 5a ; 6b) présentant un diamètre plus petit qu'un autre emplacement de l'espace intérieur, des inserts (2a ; 2b ; 2e ; 2f ; 2g) étant insérés depuis les deux extrémités du manchon (1 ; 1a ; 1b ; 1c ; 1d ; 1e ; 1f ; 1g ; 1h ; 1i), et chaque insert (2a ; 2b ; 2e ; 2f ; 2g) étant pris en sandwich entre une extrémité de la tuyauterie sous pression correspondante (p1, p2) et la portion de cou (5 ; 5a ; 6b).

4. Structure de raccord (100 ; 101 ; 102 ; 103 ; 104 ; 105) pour une tuyauterie sous pression (p1, p2) selon la revendication 2, dans lequel ledit insert (2a ; 2b ; 2e ; 2f ; 2g) présente une paire de faces annulaires opposées (b1 ; b2), de rainures d'anneau annulaires (b11 ; b21) formées respectivement dans les faces annulaires (b1 ; b2), et des joints toriques (3) insérés dans les rainures d'anneau (b11 ; b21).

5. Structure de raccord (100 ; 101 ; 102 ; 103 ; 104 ; 105) pour une tuyauterie sous pression (p1, p2) selon la revendication 3, dans laquelle chacun desdits inserts (2a ; 2b ; 2e ; 2f ; 2g) présente une surface circonférentielle extérieure (21) formée dans une face effilée mâle avec un diamètre progressivement plus petit vers la portion de cou (5 ; 5a ; 6b), et ledit manchon (1 ; 1a ; 1b ; 1c ; 1d ; 1e ; 1f ; 1g ; 1h ; 1i) présente une surface circonférentielle intérieure (20) dans laquelle une portion entourant la face effilée mâle est formée dans une face effilée femelle avec un diamètre progressivement plus petit vers la portion de cou (5 ; 5a ; 6b).

**6.** Structure de raccord (100 ; 101 ; 102 ; 103 ; 104 ; 105) pour une tuyauterie sous pression (p1, p2) selon la revendication 1, comprenant en outre une portion de bride (6 ; 9, 12a, 13a) formant conjointement avec le manchon (1 ; 1a ; 1b ; 1c ; 1d ; 1e ; 1f ; 1g ; 1h ; 1i) un couplage de bride (8 ; 11 ; 12 ; 14).

**7.** Structure de raccord (100 ; 101 ; 102 ; 103 ; 104 ; 105) pour une tuyauterie sous pression (p1, p2) selon la revendication 6, dans laquelle ladite tuyauterie sous pression (p1, p2) insérée dans l'espace intérieur du couplage de bride (8 ; 11 ; 12 ; 14) présente une portion d'extrémité surplombant une face destinée à être raccordée à la tuyauterie sous pression (p1, p2) d'un autre côté de couplage au travers de l'espace intérieur du couplage de bride (8 ; 11 ; 12 ; 14).

**8.** Structure de raccord (100 ; 101 ; 102 ; 103 ; 104 ; 105) pour une tuyauterie sous pression (p1, p2) selon la revendication 6, dans laquelle ledit couplage de bride (8 ; 11 ; 12 ; 14) comprend :

une surface circonférentielle intérieure formant une voie étroite concentrique avec l'espace intérieur ;
une face annulaire (6b) prévue entre ladite surface circonférentielle intérieure et ledit espace intérieur ; et
un insert (2a ; 2b ; 2e ; 2f ; 2g) pour l'étanchéité, ledit insert (2a ; 2b ; 2e ; 2f ; 2g) étant placé entre la portion d'extrémité de la tuyauterie sous pression (p1, p2) et ladite face annulaire (6b).

**9.** Structure de raccord (100 ; 101 ; 102 ; 103 ; 104 ; 105) pour une tuyauterie sous pression (p1, p2) selon la revendication 3, comprenant en outre :

une rainure d'anneau annulaire (b11, b21) sur chacune des faces annulaires des deux côtés de la portion de cou (5 ; 5a ; 6b) ;
des joints toriques (3) destinés à être insérés dans lesdites rainures d'anneau (b11, b21).

**10.** Structure de raccord (100 ; 101 ; 102 ; 103 ; 104 ; 105) pour une tuyauterie sous pression (p1, p2) selon la revendication 1, dans laquelle chacun desdits boulons (4a ; 4c ; 4d ; 40) comprend en outre :

une tête présentant une encoche (r) ; et
une détente (7) pour la fixation d'une position relative avec le manchon (1 ; 1a ; 1b ; 1c ; 1d ; 1e ; 1f ; 1g ; 1h ; 1i), dans laquelle la détente (7) est insérée dans l'encoche (r) lorsque le boulon (4a ; 4c ; 4d ; 40) est inséré dans le trou (h1 ; h5) du manchon (1 ; 1a ; 1b ; 1c ; 1d ; 1e ; 1f ; 1g ; 1h ; 1i).

**11.** Structure de raccord (100 ; 101 ; 102 ; 103 ; 104 ; 105) pour une tuyauterie sous pression (p1, p2) selon la revendication 1, comprenant en outre :
un couplage lâche (13) présentant une portion de bride (13a) touchant sur une extrémité du manchon (1 ; 1a ; 1b ; 1c ; 1d ; 1e ; 1f ; 1g ; 1h ; 1i) et une portion de corps (13b) s'étendant vers un autre côté d'extrémité du manchon (1 ; 1a ; 1b ; 1c ; 1d ; 1e; 1f ; 1g ; 1h ; 1i) au travers d'une surface circonférentielle extérieure du manchon (1 ; 1a ; 1b ; 1c ; 1d ; 1e ; 1f ; 1g; 1h ; 1i).

**12.** Structure de raccord (100 ; 101 ; 102 ; 103 ; 104 ; 105) pour une tuyauterie sous pression (p1, p2) selon la revendication 2, dans laquelle ledit insert (2a ; 2b ; 2e ; 2f ; 2g) présente des trous filetés non débouchants (h2 ; h4) sur une surface extérieure, lesdits trous filetés non débouchants (h2 ; h4) étant prévus sur des emplacements correspondant aux trous débouchants (h1 ; h5) du manchon (1 ; 1a ; 1b ; 1c ; 1d ; 1e ; 1f ; 1g ; 1h ; 1i), et l'insert (2a ; 2b ; 2e ; 2f ; 2g) est prévu sur le manchon (1 ; 1a ; 1b ; 1c ; 1d ; 1e ; 1f ; 1g ; 1h ; 1i) au travers des trous débouchants (h1 ; h5) avec les boulons (4a ; 4c ; 4d ; 40).

**13.** Structure de raccord (100 ; 101 ; 102 ; 103 ; 104 ; 105) pour une tuyauterie sous pression (p1, p2) selon la revendication 1, dans laquelle chacune de ladite tuyauterie sous pression (p1, p2) présente une surface circonférentielle extérieure avec un filet de vis (sc2) et ledit manchon (1 ; 1a ; 1b ; 1c ; 1d ; 1e; 1f ; 1g ; 1h ; 1i) présente un filet de vis (sc1) à visser conjointement avec le filet de vis (sc2) de la tuyauterie sous pression (p1 ; p2), et la pression est appliquée sur l'insert par vissage de la tuyauterie sous pression (p1 ; p2) dans le manchon (1 ; 1a ; 1b ; 1c ; 1d ; 1e ; 1f ; 1g ; 1h ; 1i).

**14.** Structure de raccord (100 ; 101 ; 102 ; 103 ; 104 ; 105) pour une tuyauterie sous pression (p1, p2) selon la revendication 1, dans laquelle lesdits boulons (4a ; 4c ; 4d ; 40) sont vissés sur les filets de vis du manchon (1 ; 1a ; 1b; 1c ; 1d ; 1e; 1f ; 1g ; 1h ; 1i) en communication.

**15.** Structure de raccord (100 ; 101 ; 102 ; 103 ; 104 ; 105) pour une tuyauterie sous pression (p1 ; p2) selon la revendication 14, dans laquelle chaque tuyauterie sous pression (p1 ; p2) présente des trous non débouchants (h2 ; h4) présentant chacun une surface circonférentielle intérieure lisse cylindrique, chacun desdits boulons (4a ; 4c ; 4d ; 40) présente une portion à insérer dans le trou non débouchant (h2 ; h4) sans filet de vis, et lorsque la tuyauterie sous pression (p1, p2) est insérée dans l'espace intérieur du manchon (1 ; 1a ; 1b ; 1c ; 1d ; 1e ; 1f ; 1g ; 1h ; 1i), la tuyauterie sous pression (p1, p2) s'adapte au manchon (1 ; 1a; 1b; 1c; 1d ; 1e; 1f; 1g ; 1h ; 1i) en faisant communiquer les trous (h2 ; h4) de la tuyauterie sous pression avec les trous (h1 ; h5) du manchon (1 ; 1a ; 1b ; 1c ; 1d ; 1e ; 1f ; 1g ; 1h ; 1i).

# FIG. 1

# FIG. 2

A

B

C

D

# FIG. 3

A

B

C

FIG. 4

A

B

C

FIG. 5

FIG. 6

# F I G . 7

FIG. 8

FIG. 9

FIG. 10

FIG. 11

A

B

C

FIG. 12

F I G . 1 3

# FIG. 14

FIG. 15

FIG. 16

# FIG. 17

FIG. 18

A

B

C

FIG. 19

# FIG. 20

FIG. 21

A

B

C

# FIG. 22

A

B

**EP 2 613 073 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 51009667 A
- JP 2003180011 A
- JP 2010180957 A
- CN 2616783 Y